Europäisches Patentamt

European Patent Office

Office européen des brevets

(11) Publication number: **0 482 667 A1**

## EUROPEAN PATENT APPLICATION

(21) Application number: **91118257.4**

(22) Date of filing: **25.10.91**

(51) Int. Cl.5: **F16B 7/18**, E04B 1/58, E06B 3/96

(30) Priority: **26.10.90 IT 3071490 U**
**26.10.90 IT 3071590 U**

(43) Date of publication of application:
**29.04.92 Bulletin 92/18**

(84) Designated Contracting States:
**AT BE CH DE DK ES FR GB GR IT LI LU NL SE**

(71) Applicant: **CAODURO S.P.A**
**Via Chiuppese**
**I-36010 Monticello Conte Otto, Vicenza(IT)**

(72) Inventor: **Caoduro, Paolo**
**Via Europa**
**I-36010 Zané, Vicenza(IT)**
Inventor: **Caoduro, Carlo**
**Via Chiuppese**
**I-36010 Monticello Conte Otto, Vicenza(IT)**

(74) Representative: **Patentanwälte Grünecker,**
**Kinkeldey, Stockmair & Partner**
**Maximilianstrasse 58**
**W-8000 München 22(DE)**

(54) **Preformed joint.**

(57) The invention relates to a preformed joint particularly suitable for the connection of tubular shapes (8,10,11) in any kind of junction. Said preformed joint comprises a pivot pin (5) which is pivotally mounted in projecting ribs (3) provided in opposing flanges of a generally C-shaped body (2). A clamping screw (7) penetrates the surface of one of said tubular shapes and can be screwed into said pivot pin in a direction intersecting the longitudinal axis of said pivot pin.

Said ribs (3) are provided with threaded holes (8) in their longitudinal axis for permitting said tubular shape to be connected to said C-shaped body by means of screws (15). The web portion of said C-shaped body (2) can be coupled with the web portion of another C-shaped body and, furthermore, two identical C-shaped bodies can be unitarily formed with their web portion integrally connected to form a H-shaped body.

FIG 3

With the present invention a preformed joint is provided for the rapid and functional connection of tubular shapes which are particularly used in the execution of various kinds of covering such as, for example, tunnels, portal frames, skylights or domes for dwellings and industrial buildings.

At present, for the connection of the tubular shapes which will form the structure on which plates or preformed modules made of different plastic materials or glass will be fitted, thus performing various kinds of covering used in dwellings and industrial buildings, different solutions are adopted such as, for example, the insertion of blades or different connection elements between the two shapes, then fastening the whole with screws or passing bolts. However, the solutions which have been adopted up to now present various disadvantages both on the practical and on the aesthetic level such as, for example:

a) any joint, being either straight, mitred, curved or cross-shaped, needs a solution of its own;

b) all the various pieces forming these connection systems have very thick sections so that, once the structure has been assembled, junction points can resist both twisting and bending movements, and furthermore,

c) in the visible parts of the structure they show the bolts used for the connection.

The object of the present invention is to provide a preformed joint which is formed by a body provided with ribs on which there are obtained the seat for a pivot pin and suitable holes for fastening the tubular shapes to be connected thus avoiding the excessive specific weight of the systems which have been used up to now, though keeping in time both considerable characteristics of resistance and of tightness of the junction, and sensible economic advantages resulting from the fact that with only one kind of joint conveniently assembled all joint needs are satisfied, and also improving the aesthetic look, since all the protruding bolts used up to now are eliminated. Now the invention will be described and illustrated in detail by means of the enclosed Table of Drawings, merely by way of two non restrictive embodiments, where:

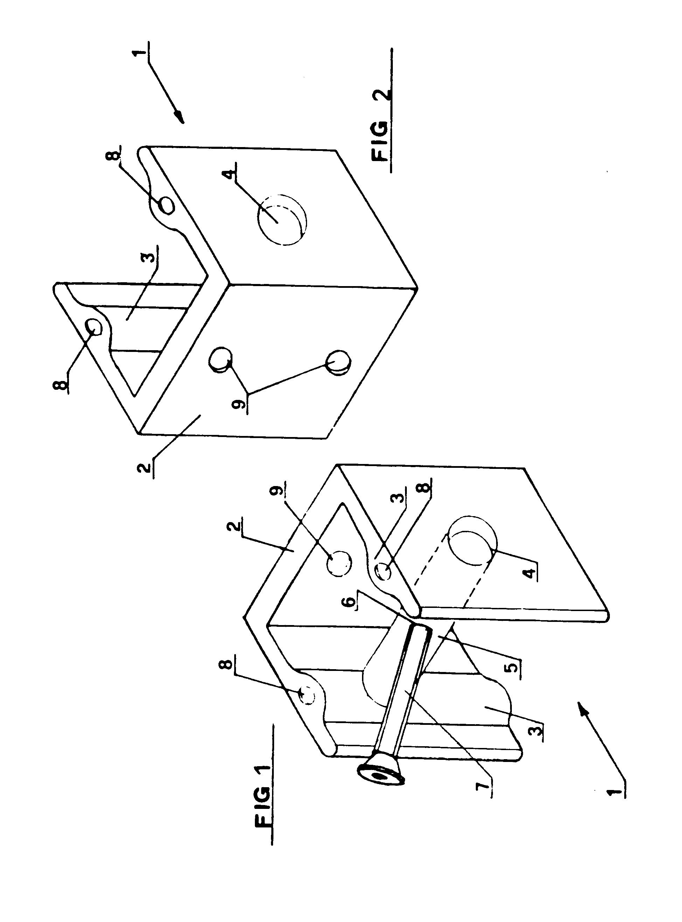

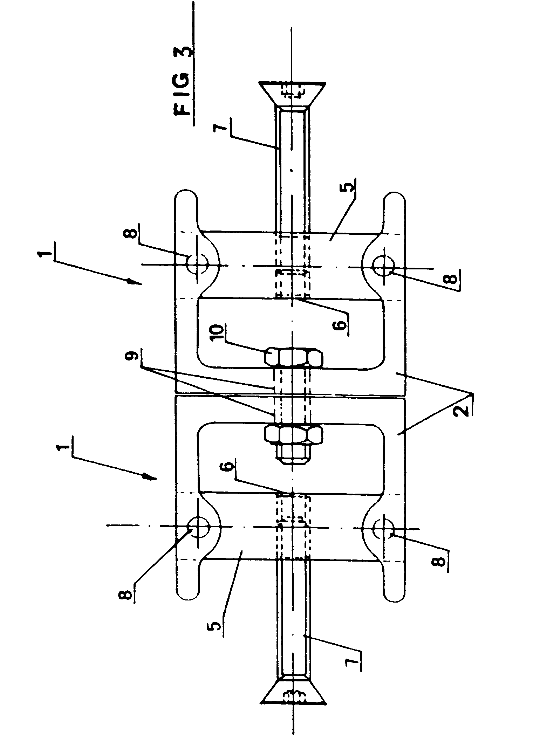

Figs. 1 and 2 (Tab. I) are the pespective views of the front and of the back of the first embodiment of the inventive joint.

Fig. 3 (Tab. II) is the top view of the two joints (first embodiment) which have been prearranged for the connection of two shapes in a straight or curved junction.

Fig. 4 (Tab. III) is the perspective view of two joints (first embodiment) correctly fitted in a connection of shapes in the formation of a cross-shaped junction.

Fig. 5 is a top view of the whole joint according to the second embodiment and

Fig. 6 is a perspective view of the joint (second embodiment) correctly fitted in the connection of two tubular shapes.

As shown in the enclosed Tables of Drawings, joint 1 (Tab. I), according to the first embodiment, is formed by a preformed part 2 which is provided with ribs 3 where holes 4 are obtained for the passage of the pivot pin 5 which presents the threaded hole 6 which is prearranged for the clamping screw 7. The ribs 3 are suitable both for increasing the area on which the holes 4 and the threaded holes 8 are obtained and for increasing the resistance of the joint 1. On the back of joint 1 there are obtained the passing holes 9 which are prearranged for the passage of bolts 10.

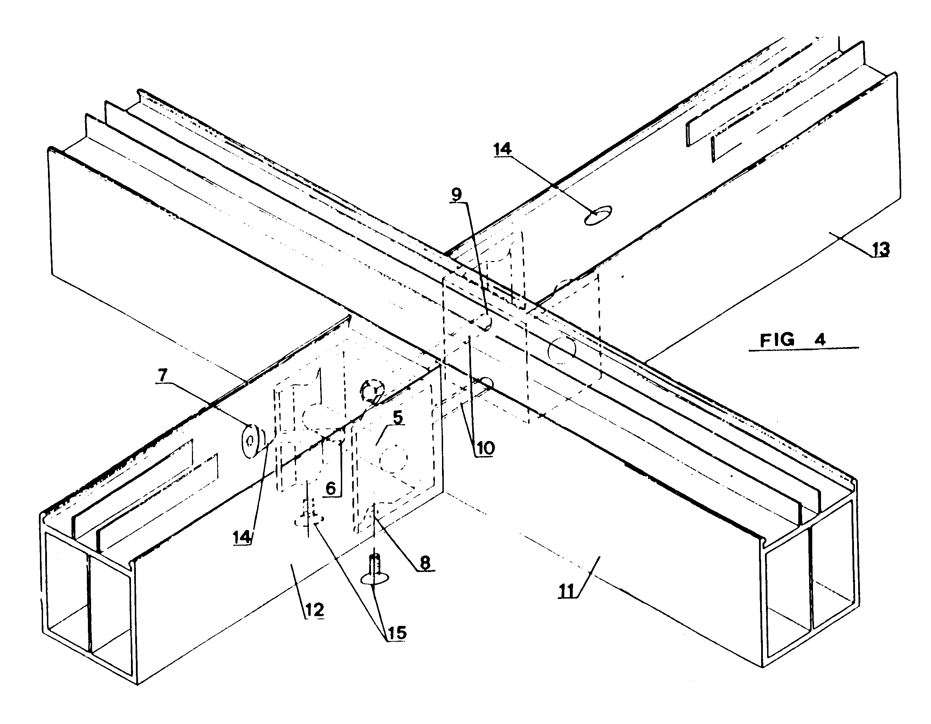

In fig. 4 (Tab. III) the correct assembling of joint 1 can be seen, while joining metal shapes in the cross-shaped formation, as follows:

On shape 11 there are made passing holes corresponding to the holes 9 of the joint 1 for the passage of bolts 10. At this point the two joints 1 will be fastened on shape 11 by means of the aforesaid bolts 10, the joint 1, after being so fastened on shapes 12 and 13, will be allowed to enter, screws 7 will be allowed to pass through holes 14 which have already been prearranged on shapes 12 and 13 and they will be fastened at the holes 6 of the pivot pins 5, since holes 14 do not have the same axis as the aforesaid holes 6. Screws 7, besides fastening joint 1 to shapes 12 and 13, will act as tie rods, ensuring the junction of the different components and the perfect tightness of the whole. At this point screws 15 will be fastened in the holes 8 which are present in the ribs 3 of joint 1.

In the mere junction of straight or curved shapes it will be sufficient to join previously the back sides of two joints 1 by means of bolts 10, as shown in Fig. 3 (tab. II), observing the above-described assembling phases.

The advantages of the preformed joint, according to the first embodiment, are evident: whether it is single, coupled or variously combined, it allows any kind of junction of tubular shapes, said junction being either cross-shaped, straight, curved or mitred, thus replacing all the different solutions which have been adopted up to now, making it possible to reduce production and assembly costs and time.

Furthermore, the above-mentioned joint, once it has been correctly fitted on the tubular shapes, guarantees a rigid structure, limiting all kinds of motion to which the junction is subject and, last but not least, a good finish, as all the protruding bolts which have been used up to now are eliminated.

Moreover, it will be noted that the pin, being a pivot pin, makes it possible to position screw 7 with any inclination, thus facilitating the fastening operation.

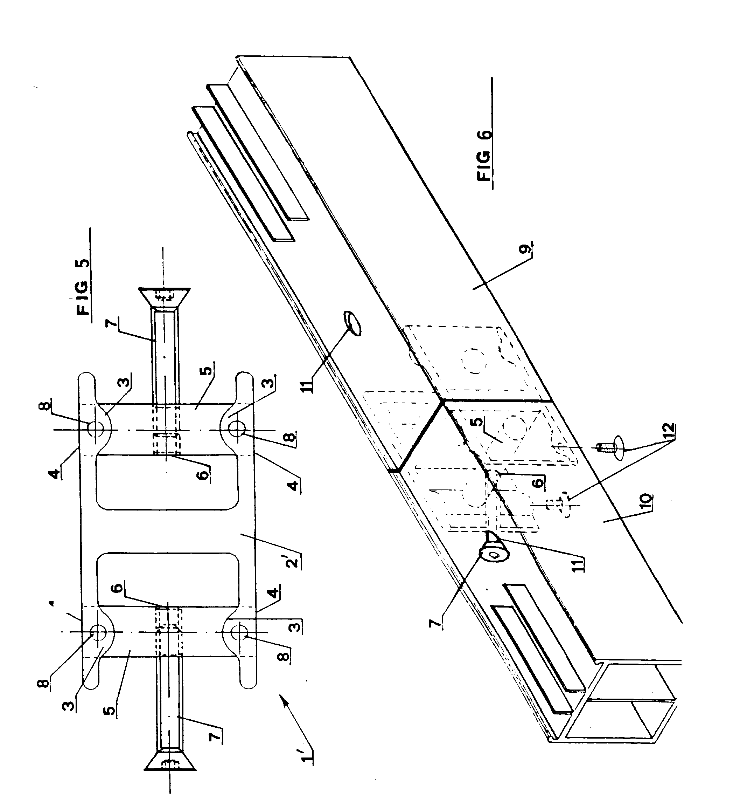

As shown in figures 5 and 6 the second embodiment of the inventive preformed joint is H-shaped. Typically two identical C-shaped bodies according to the first embodiment are unitarily formed with their web portion integrally connected to form the H-shaped body according to the second embodiment of the present invention.

As shown in figure 5, joint 1' according to the second embodiment is formed by a preformed H-shaped part 2' which in each of its four flanges is provided with a rib 3 as in the first embodiment. Therefore in each flange there are provided two opposing ribs 3. As in the first embodiment each rib 3 is provided with opposing holes 4 within which the end portions of pivot pins are mounted. The H-shaped body 2' of the second embodiment houses one pivot pin 5 between each of its two pairs of flanges. The ribs 3 are suitable both for increasing the area on which the holes 4 and the threaded holes 8 are provided and for increasing the resistance of the joint.

In Fig. 6 the correct assembly of joint 1' can be seen, according to the invention, while joining tubular shapes, as follows:
After inserting the joint 1' in the shapes 9 and 10, screws 7 will be allowed to pass through the holes 11 which have already been prearranged on shapes 9 and 10 and they will be fastened at the holes 6 of the pivot pins 5, since holes 11 do not have the same axis as the aforesaid holes 6. Screws 7, besides fastening joint 1' to shapes 9 and 10, will act as tie rods, ensuring the junction of the shapes and the perfect tightness of the whole. At this point screws 12 will be fastened in the holes 8 which are present in the ribs 3 of joint 1'. The advantages of the preformed joint, according to the second embodiment, are evident: it allows the rapid junction of tubular shapes, thus replacing the different solutions which have been adopted up to now and making it possible to reduce production and assembly costs and time.

Furthermore, the above-mentioned joint, once it has been correctly fitted on the tubular shapes, guarantees a rigid structure, limiting all kinds of motion to which the junction is subject and, last but not least, a good finish, as all the protruding bolts which have been used up to now are eliminated. Moreover, it will be noted that the pin 5, being a pivot pin, makes it possible to position screw 7 with any inclination, thus facilitating the fastening operation.

## Claims

1. A preformed joint, particularly suitable for the connection of tubular shapes (9, 10, 11) in any kind of junction, characterised in that a pivot pin (5) is pivotally mounted in projecting ribs (3) provided in opposing flanges of a generally C-shaped body (2);

   that a clamping screw (7) penetrating the surface of one of said tubular shapes can be screwed into said pivot pin (5) in a direction intersecting the longitudinal axis of said pivot pin for connecting said tubular shape with said pivot pin;

   and in that said ribs (3) are provided with threaded holes (8) in their longitudinal axis for permitting said tubular shape to be connected to said C-shaped body (2) by means of screws (15).

2. A preformed joint according to claim 1, wherein the web portion of said C-shaped body (2) may be coupled with the web portion of another C-shaped body (2).

3. A preformed joint according to claim 2 characterised in that two identical C-shaped bodies (2) are unitarily formed with their web portion integrally connected to form a H-shaped body and in that each of said two integrally connected bodies (2) corresponds to the C-shaped body as defined in claim 1.

FIG 1

FIG 2

FIG 3

EP 0 482 667 A1

FIG 4

EP 0 482 667 A1

FIG 5

FIG 6

European
Patent Office

EUROPEAN SEARCH
REPORT

Application Number

EP 91 11 8257

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 879 017   (MAXCY et al.)<br>* Column 2, line 62 - column 3, line 67; figures 3,5 *<br>– – – | 1 | F 16 B 7/18<br>E 04 B 1/58<br>E 06 B 3/96 |
| A | FR-A-2 593 862   (TECHNAL FRANCE)<br>* Page 7, line 24 - page 8, line 20; figures 1-3 *<br>– – – | 1 | |
| A | FR-A-2 095 529   (VEREINIGTE ALUMINIUM-WERKE AG)<br>* Claims 1; figures 6a-7c *<br>– – – | 1 | |
| A | GB-A-1 314 878   (EDWARD WILLIAMS (HOLDINGS) LTD))<br>* Page 1, lines 68-74; figure *<br>– – – – – | 1 | |

TECHNICAL FIELDS
SEARCHED (Int. Cl.5)

F 16 B
E 04 B
E 06 B

The present search report has been drawn up for all claims

| Place of search | Date of completion of search | Examiner |
|---|---|---|
| The Hague | 21 January 92 | CALAMIDA G. |